# EUROPEAN PATENT APPLICATION

(11) **EP 4 696 399 A1**
(43) Date of publication of application: **18.02.2026**
(21) Application number: 24195071.6
(22) Date of filing: 16.08.2024
(51) Int. Cl.: B01D 53/04, B01D 53/26, F01N 3/00

(54) **METHOD AND SYSTEM FOR CAPTURING CARBON DIOXIDE FROM ENGINE EXHAUST GAS, IN PARTICULAR FOR APPLICATION IN VEHICLES**

(71) Applicant: Qaptis Sàrl, 1015 Lausanne (CH)
(72) Inventor: Green, Edward, Oakdale, PA 15071 (US)
(74) Representative: ABREMA SA

(57) **Abstract**

There is described a method and system for carbon dioxide capture using temperature-swing adsorption. First and second, respectively third and fourth temperature-swing adsorber units (TSA_{D1}, TSA_{D2}, TSA_{C1}, TSA_{C2}) are provided that are operable in alternate adsorption and desorption cycles to capture and remove water and carbon dioxide, respectively, from the exhaust gas, each of the temperature-swing adsorber units (TSA_{D1}, TSA_{D2}, TSA_{C1}, TSA_{C2}) including a sorbent bed (AD) and a heat exchanger structure (HEX) thermally coupled to the sorbent bed (AD). Hot exhaust gas coming from the internal combustion engine (ICE) is routed through the heat exchanger structure (HEX) of that one (TSA_{D1}; TSA_{D2}) of the first and second temperature-swing adsorber units (TSA_{D1}, TSA_{D2}) that undergoes a desorption cycle, to sustain desorption of water adsorbed by the sorbent bed (AD) thereof, as well as through the heat exchanger structure (HEX) of that one (TSA_{C1}; TSA_{C2}) of the third and fourth temperature-swing adsorber units (TSA_{C1}, TSA_{C2}) that undergoes a desorption cycle, to sustain desorption of carbon dioxide adsorbed by the sorbent bed (AD) thereof. The exhaust gas is furthermore cooled to produce cold exhaust gas, which is routed through the sorbent bed (AD) of that one (TSA_{D2}; TSA_{D1}) of the first and second temperature-swing adsorber units (TSA_{D1}, TSA_{D2}) that undergoes an adsorption cycle, to cause adsorption of water by the sorbent bed (AD), and then through the sorbent bed (AD) of that one (TSA_{C2}; TSA_{C1}) of the third and fourth temperature-swing adsorber units (TSA_{C1}, TSA_{C2}) that undergoes an adsorption cycle, to cause adsorption of carbon dioxide by the sorbent bed (AD). Operation of the first to fourth temperature-swing adsorber units (TSA_{D1}, TSA_{D2}, TSA_{C1}, TSA_{C2}) is then switched from the desorption cycle to the adsorption cycle, and vice versa, and the process is cyclically repeated.

## Description

### TECHNICAL FIELD

The present invention generally relates to a method of capturing carbon dioxide from exhaust gas produced by an internal combustion engine. The invention also generally relates to a temperature-swing adsorption (TSA) system for capturing carbon dioxide from exhaust gas outputted by an internal combustion engine, especially for vehicles equipped with an on-board carbon dioxide capture system including such a temperature-swing adsorption system.

### BACKGROUND OF THE INVENTION

Temperature-swing adsorption (TSA) systems for capturing water and/or carbon dioxide from exhaust gas produced by an internal combustion engine are known as such in the art. Such TSA systems typically includes multiple TSA units that are operated in alternate adsorption and desorption cycles to capture (adsorb) water or carbon dioxide in a sorbent bed, during the adsorption cycle, and subsequently release (desorb) the captured water or carbon dioxide that has been adsorbed in the sorbent bed, during the desorption cycle. The released water or carbon dioxide thus removed from the exhaust gas can then be appropriately processed for disposal or storage, with the processed exhaust gas being vented to atmosphere, thereby mitigating CO₂ emissions.

International (PCT) Publication No. WO 2020/089186 A1 discloses a temperature-swing adsorption system for capturing carbon dioxide from exhaust gas outputted by an internal combustion engine. In this case, waste heat available in the stream of exhaust gas produced by the internal combustion engine is exploited to drive one or more turbines or compressors (for the purpose of compressing and liquifying carbon dioxide captured by the adsorption system) via a heat pump system comprising a heat exchanger circuit that uses a fluid such as CO₂ to drive the turbines or compressors by thermal expansion of the fluid. Exhaust gas per se is not exploited directly as a heat transfer fluid to sustain desorption or adsorption.

U.S. Patent Publication No. US 2004/0107832 A1 discloses a temperature-swing adsorption system for atmospheric water harvesting, which exploits waste heat from exhaust gas produced by an internal combustion engine of a vehicle to sustain desorption of water. No particular carbon dioxide capture is contemplated in this case.

A TSA unit in essence consists of a vessel that contains sorbent material, such as a sorbent structure or sorbent pellets, forming a sorbent bed that is used for gas separation. When the sorbent bed is cold, it adsorbs or captures gas molecules of a select size. When the sorbent bed is warmed, the captured gas molecules are desorbed or released. This phenomenon is especially used to separate gases such as gaseous water from air or carbon dioxide (CO₂) from exhaust gases.

The heating and cooling of the sorbent material in a TSA unit requires a working heat transfer fluid fed to or through the TSA unit, which typically involves ancillary equipment and components that add to the volume, weight and cost of the gas separation system.

Capturing and separating carbon dioxide (CO₂) from exhaust gases of vehicles is a growing concern. Using a TSA system to capture the CO₂ is one method for doing so. For practical applications, the TSA system must be small enough to fit on a vehicle and be as much as possible light-weight to minimize impact on fuel efficiency.

There therefore remains a need for an improved method and system embodying temperature-swing adsorption for carbon dioxide capture, especially for applications in vehicles.

### SUMMARY OF THE INVENTION

A general aim of the invention is to provide a method and system that obviate the shortcomings and limitations of the known solutions of the prior art.

More specifically, an aim of the present invention is to provide such a solution that is simpler to implement.

A further aim of the invention is to provide such a solution that is particularly suited for the purpose of on-board processing of exhaust gas produced by the internal combustion engine of a vehicle, such as a truck, naval ship, agricultural vehicle, or the like.

These aims, and others, are achieved thanks to the solutions defined in the claims.

There is accordingly provided a method of capturing carbon dioxide from exhaust gas produced by an internal combustion engine, the features of which are recited in claim 1, namely such a method including:
- providing first and second temperature-swing adsorber units that are operated in alternate adsorption and desorption cycles to capture and remove water from the exhaust gas (which first and second TSA units are also referred to as "dryer TSAs"); and
- providing third and fourth temperature-swing adsorber units that are operated in alternate adsorption and desorption cycles to capture and remove carbon dioxide from the exhaust gas (which third and fourth TSA units are also referred to as "CO₂ TSAs"),
wherein each of the first to fourth temperature-swing adsorber units includes a sorbent bed and a heat exchanger structure thermally coupled to the sorbent bed.

The method of the invention comprises:
(a) routing hot exhaust gas coming from the internal combustion engine through the heat exchanger structure of that one of the first and second temperature-swing adsorber units that undergoes a desorption cycle, to sustain desorption of water adsorbed by the sorbent bed thereof, as well as through the heat exchanger structure of that one of the third and fourth temperature-swing adsorber units that undergoes a desorption cycle, to sustain desorption of carbon dioxide adsorbed by the sorbent bed thereof;
(b) cooling the exhaust gas to produce cold exhaust gas;
(c) routing the cold exhaust gas through the sorbent bed of that one of the first and second temperature-swing adsorber units that undergoes an adsorption cycle, to cause adsorption of water by the sorbent bed, and then through the sorbent bed of that one of the third and fourth temperature-swing adsorber units that undergoes an adsorption cycle, to cause adsorption of carbon dioxide by the sorbent bed;
(d) switching operation of the first to fourth temperature-swing adsorber units from the desorption cycle to the adsorption cycle, and vice versa; and
(e) cyclically repeating steps (a) to (d).

Thanks to the invention, waste heat from the hot engine exhaust gas is conveniently used as heating fluid to sustain desorption in both TSA units undergoing the desorption cycle, namely to sustain desorption of water, as well as desorption of carbon dioxide, without this necessitating supply of a dedicated heating fluid. By routing the hot exhaust gas through the TSA units undergoing the desorption cycle, heat is not wasted.

Furthermore, efficiency is improved as the hot engine exhaust gas being fed through the heat exchanger structure of the dryer TSA and the heat exchanger structure of the CO₂ TSA is partly cooled as a result of heat transfer to the associated sorbent beds. The exhaust gas needs to be cooled down anyway with a view to ensure adequate adsorption of water and carbon dioxide therefrom. Therefore, by the time the exhaust gas leaves the heat exchanger structures of the dryer and CO₂ TSAs, its temperature is reduced, and the power required to cool it down to ambient temperature is greatly decreased, which improves power efficiency even further.

By way of preference, step (a) includes routing the hot exhaust gas successively through the heat exchanger structure of that one of the first and second temperature-swing adsorber units that undergoes the desorption cycle and then through the heat exchanger structure of that one of the third and fourth temperature-swing adsorber units that undergoes the desorption cycle. Furthermore, step (b) includes cooling the exhaust gas exiting the heat exchanger structure of that one of the third and fourth temperature-swing adsorber units that undergoes the desorption cycle to produce the cold exhaust gas. Efficiency is further improved as a result, as the dryer TSA typically uses sorbent material requiring higher desorption temperatures than the sorbent material used for carbon dioxide capture in the CO₂ TSA. In other words, the hottest exhaust gas is used to heat the sorbent bed of the dryer TSA during desorption, and the exhaust gas exiting the heat exchanger structure of the dryer TSA, which is at a slightly lower temperature, is still at a high enough temperature to efficiently heat the sorbent bed of the downstream-located CO₂ TSA.

In accordance with an embodiment, the method further includes exploiting gas exiting the sorbent bed of that one of the third and fourth temperature-swing adsorber units that undergoes the adsorption cycle as a purge gas, and routing the purge gas through the sorbent bed of that one of the first and second temperature-swing adsorber units that undergoes the desorption cycle. The purge gas, mixed with water released by that one of the first and second temperature-swing adsorber units that undergoes the desorption cycle, may conveniently be vented to atmosphere. Water could alternatively be recovered for other purposes.

In accordance with yet another embodiment, step (c) may further include routing the cold exhaust gas through the heat exchanger structure of that one of the first and second temperature-swing adsorber units that undergoes the adsorption cycle to cool the sorbent bed thereof and/or through the heat exchanger structure of that one of the third and fourth temperature-swing adsorber units that undergoes the adsorption cycle to cool the sorbent bed thereof. In this latter context, the cold exhaust gas exiting the heat exchanger structure may be vented to atmosphere.

Preferably, step (c) includes feeding the cold exhaust gas under the action of a blower device to those of the first to fourth temperature-swing adsorber units that undergo the adsorption cycle. This blower device is advantageously used as a pressure boost to overcome the pressure drops in the system, due to cooling of the exhaust gas, thereby minimizing back pressure on the engine.

The exhaust gas may be cooled at step (b) by means of an air-to-gas cooler. Other cooling techniques could however be contemplated.

Advantageously, carbon dioxide released by that one of the third and fourth temperature-swing adsorber units that undergoes the desorption cycle may be further processed for storage.

In accordance with a preferred embodiment, desorption of carbon dioxide in the third and fourth temperature-swing adsorber units is performed under vacuum, for improved CO₂ desorption efficiency.

There is also claimed a temperature-swing adsorption system for capturing carbon dioxide from exhaust gas outputted by an internal combustion engine, the features of which are recited in independent claim 9, namely such a temperature-swing adsorption system comprising:
- first and second temperature-swing adsorber units that are operable in alternate adsorption and desorption cycles to capture and remove water from the exhaust gas (which first and second TSA units are likewise also referred to as "dryer TSAs"); and
- third and fourth temperature-swing adsorber units that are operable in alternate adsorption and desorption cycles to capture and remove carbon dioxide from the exhaust gas (which third and fourth TSA units are likewise also referred to as "CO₂ TSAs"),
wherein each of the first to fourth temperature-swing adsorber units includes a sorbent bed and a heat exchanger structure thermally coupled to the sorbent bed.

According to the invention, the temperature-swing adsorption system is configured to route hot exhaust gas coming from the internal combustion engine through the heat exchanger structure of that one of the first and second temperature-swing adsorber units that undergoes a desorption cycle, to sustain desorption of water adsorbed by the sorbent bed thereof, as well as through the heat exchanger structure of that one of the third and fourth temperature-swing adsorber units that undergoes a desorption cycle, to sustain desorption of carbon dioxide adsorbed by the sorbent bed thereof. In addition, the temperature-swing adsorption system further comprises a cooler device to cool the exhaust gas to produce cold exhaust gas. Lastly, the temperature-swing adsorption system is further configured to route the cold exhaust gas through the sorbent bed of that one of the first and second temperature-swing adsorber units that undergoes an adsorption cycle, to cause adsorption of water by the sorbent bed, and then through the sorbent bed of that one of the third and fourth temperature-swing adsorber units that undergoes an adsorption cycle, to cause adsorption of carbon dioxide by the sorbent bed.

By way of preference, the temperature-swing adsorption system is configured to route the hot exhaust gas successively through the heat exchanger structure of that one of the first and second temperature-swing adsorber units that undergoes the desorption cycle and then through the heat exchanger structure of that one of the third and fourth temperature-swing adsorber units that undergoes the desorption cycle. In addition, the temperature-swing adsorption system is further configured such that the exhaust gas exiting the heat exchanger structure of that one of the third and fourth temperature-swing adsorber units that undergoes the desorption cycle is cooled by the cooler to produce the cold exhaust gas.

In accordance with an embodiment, the temperature-swing adsorption system may be further configured to exploit gas exiting the sorbent bed of that one of the third and fourth temperature-swing adsorber units that undergoes the adsorption cycle as a purge gas and to route the purge gas through the sorbent bed of that one of the first and second temperature-swing adsorber units that undergoes the desorption cycle. In such case, the first and second temperature-swing adsorber units may be configured such that the purge gas, mixed with water released by that one of the first and second temperature-swing adsorber units that undergoes the desorption cycle, is vented to atmosphere.

In accordance with yet another embodiment, the temperature-swing adsorption system may be further configured to route the cold exhaust gas through the heat exchanger structure of that one of the first and second temperature-swing adsorber units that undergoes the adsorption cycle to cool the sorbent bed thereof and/or through the heat exchanger structure of that one of the third and fourth temperature-swing adsorber units that undergoes the adsorption cycle to cool the sorbent bed thereof. In such case, the first and second temperature-swing adsorber units and/or the third and fourth temperature-swing adsorber units may be configured such that the cold exhaust gas exiting the heat exchanger structure is vented to atmosphere.

By way of preference, the temperature-swing adsorption system further comprises a blower device to feed the cold exhaust gas to those of the first to fourth temperature-swing adsorber units that undergo the adsorption cycle.

The cooler device may in particular be an air-to-gas cooler, but other solutions could potentially be contemplated.

Further claimed is a carbon dioxide capture system comprising a temperature-swing adsorption system in accordance with the invention and at least one storage device to store carbon dioxide released by that one of the third and fourth temperature-swing adsorber units that undergoes the desorption cycle. The carbon dioxide capture system may further comprise at least one vacuum pump to assist carbon dioxide desorption in the third and fourth temperature-swing adsorber units.

There is also claimed a vehicle equipped with an on-board carbon dioxide capture system including a temperature-swing adsorption system in accordance with the invention for carbon dioxide capture from exhaust gas outputted by an internal combustion engine of the vehicle.

Further advantageous embodiments of the invention are discussed below.

### BRIEF DESCRIPTION OF THE DRAWINGS

Other features and advantages of the present invention will appear more clearly from reading the following detailed description of embodiments of the invention which are presented solely by way of non-restrictive examples and illustrated by the attached drawings in which:
Figure 1 is a schematic diagram of a system embodying a temperature-swing adsorption system (TSAS) in accordance with the invention for capture and storage of carbon dioxide;
Figure 2 is a schematic diagram of a temperature-swing adsorption system (TSAS) in accordance with a preferred embodiment of the invention; and
Figure 3 is a schematic diagram of a vehicle equipped with an on-board carbon dioxide capture system (CCS) including a temperature-swing adsorption system (TSAS) in accordance with the invention.

### DETAILED DESCRIPTION OF EMBODIMENTS OF THE INVENTION

The present invention will be described in relation to various illustrative embodiments. It shall be understood that the scope of the invention encompasses all combinations and sub-combinations of the features of the embodiments disclosed herein as defined by the appended claims.

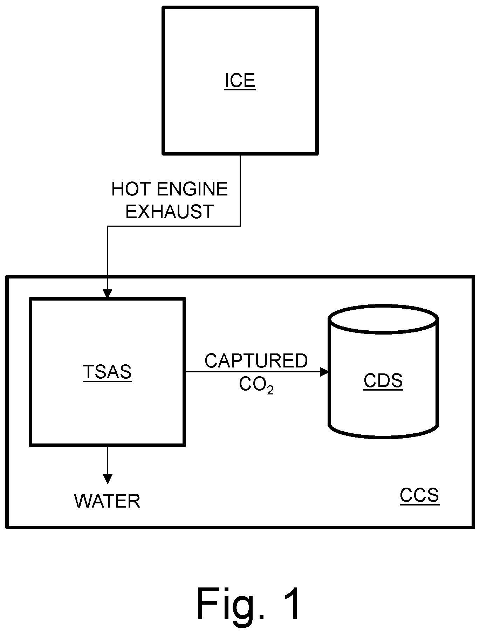

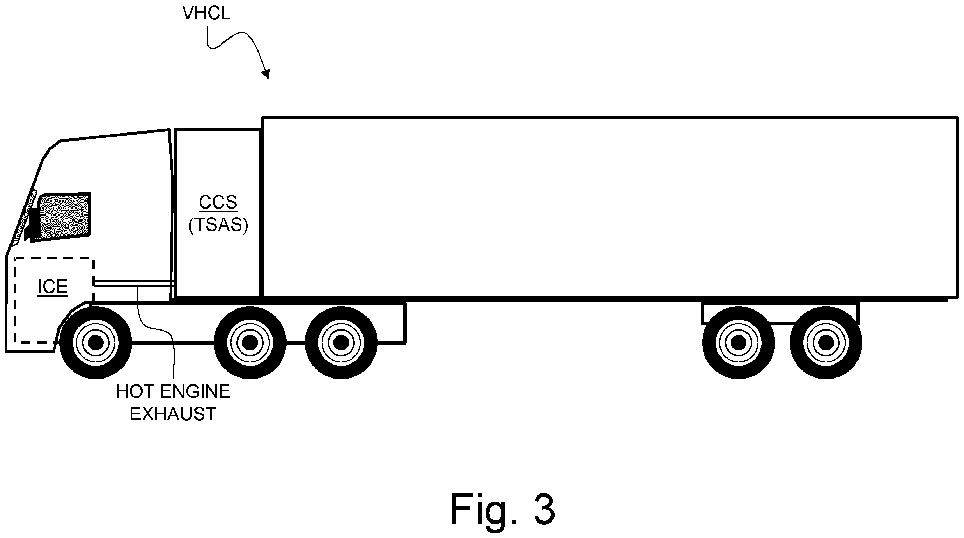

The invention will be described in the particular context of an on-board carbon dioxide capture system, designated CCS, as schematically depicted in the diagram of Figure 1, for capture and storage of carbon dioxide from exhaust gas outputted by an internal combustion engine ICE of a vehicle VHCL such as a truck (as shown in Figure 3), a naval ship, an agricultural vehicle, or the like. The invention could however be applied to other types of carbon dioxide capture systems, including standalone, stationary implementations.

As shown schematically in Figure 1, the carbon dioxide capture system CCS includes a temperature-swing adsorption system TSAS to process hot engine exhaust gas outputted by the internal combustion engine ICE and capture carbon dioxide (CO₂) for storage in at least one storage device CDS. The temperature-swing adsorption system TSAS is further configured to process the exhaust gas to remove water therefrom, which can be released into the environment, or potentially recovered or used for other purposes.

The temperature-swing adsorption system TSAS could potentially be supplemented by the additional provision of at least one vacuum pump for operation as a temperature-vacuum swing adsorption (TVSA) system with a view to improve recovery efficiency. Vacuum coupled with heat is indeed significantly more efficient than heat alone for desorption recovery of gas. In other words, when reference is made herein to temperature-swing adsorption (TSA), this should generally be understood as encompassing temperature-vacuum swing adsorption (TVSA) as a possible embodiment.

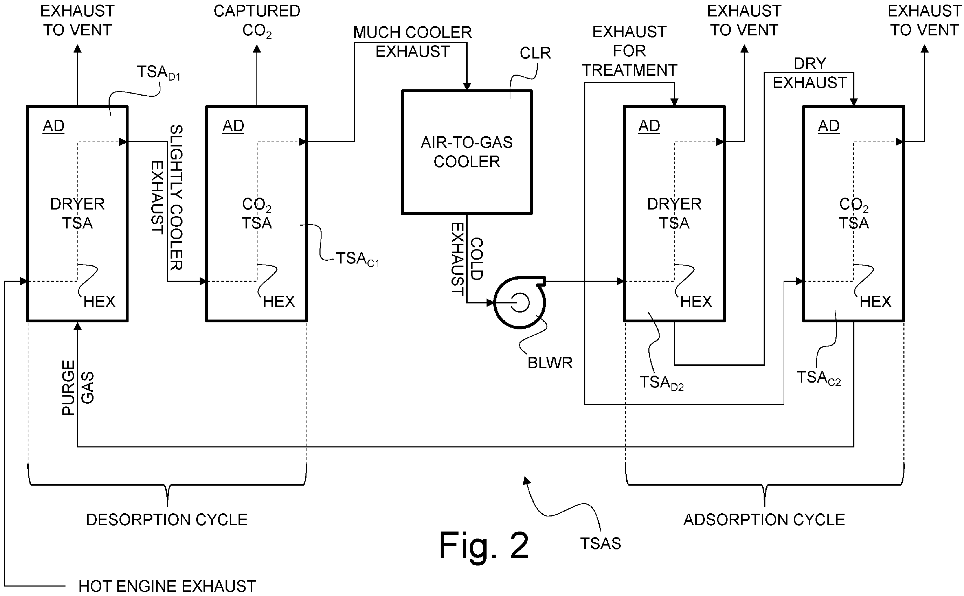

Figure 2 is a schematic diagram of a particularly preferred embodiment of a temperature-swing adsorption system TSAS in accordance with the invention. Only part of the relevant ducting is schematically shown in Figure 2, namely that part that is necessary to adequately route the exhaust gas through the components of the temperature-swing adsorption system TSAS in the relevant operating state being depicted, as explained hereafter in greater detail.

The temperature-swing adsorption system TSAS depicted in Figure 2 comprises two pairs of temperature swing adsorber units that are each operable in alternate adsorption and desorption cycles, namely:
(i) a first pair of temperature-swing adsorber units, designated TSA_{D1}, TSA_{D2}, that are operable to capture and remove water from the exhaust gas (also referred to hereafter as "dryer TSAs"); and
(ii) a second pair of temperature-swing adsorber units, designated TSA_{C1}, TSA_{C2}, that are operable to capture and remove carbon dioxide from the exhaust gas (also referred to hereafter as "CO₂ TSAs").

Each of the temperature-swing adsorber unit TSA_{D1}, TSA_{D2}, TSA_{C1}, TSA_{C2} includes a sorbent bed AD and a heat exchanger structure HEX that is thermally coupled to the sorbent bed AD.

The sorbent bed AD of the dryer TSAs TSA_{D1}, TSA_{D2} may include any adequate sorbent material capable of adsorbing water compounds from the exhaust gas, including, by way of non-limiting example, sorbent pellets made e.g. of activated alumina, which is widely used as desiccant, silica gel (such as Sorbead^{®} from BASF Catalysts Germany GmbH) or zeolite (such as zeolite 3A). Similarly, the sorbent bed AD of the CO₂ TSAs TSA_{C1}, TSA_{C2} may include any adequate sorbent material capable of adsorbing carbon dioxide from the exhaust gas, including, by way on non-limiting example, sorbent pellets made e.g. of lithium orthosilicate (Li₄SiO₄) or zeolite (such as zeolite 13X or 5A), which are of primary interest for carbon dioxide capture. Pre-drying/dehumidification of the exhaust gas prior to carbon dioxide capture is implemented for the sake of efficiency as water compounds could otherwise interfere with CO₂ adsorption and thereby negatively impact the ability of the temperature-swing adsorption system TSAS to efficiently capture carbon dioxide.

The temperature-swing adsorber units TSA_{D1}, TSA_{D2}, TSA_{C1}, TSA_{C2} may exhibit any adequate configuration that allows indirect heat transfer with the sorbent beds AD, hence the provision of the heat transfer structures HEX that allow a heat transfer fluid to flow through the temperature-swing adsorber units TSA_{D1}, TSA_{D2}, TSA_{C1}, TSA_{C2} without direct contact between the heat transfer fluid and the sorbent material.

In the illustration of Figure 2, one will appreciate and understand that dryer TSA TSA_{D1} and CO₂ TSA TSA_{C1} are both undergoing a desorption cycle, while dryer TSA TSA_{D2} and CO₂ TSA TSA_{C2} are both undergoing an adsorption cycle, as schematically indicated. During a subsequent operating cycle of the temperature-swing adsorption system TSAS, one will appreciate and understand that operation of the TSAs is reversed, with dryer TSA TSA_{D1} and CO₂ TSA TSA_{C1} being switched to an adsorption cycle, while dryer TSA TSA_{D2} and CO₂ TSA TSA_{C2} are switched to a desorption cycle, (with routing of the exhaust gas being changed accordingly).

More specifically, the temperature-swing adsorption system TSAS is configured to route hot engine exhaust gas coming from the internal combustion engine (not shown in Figure 2) through the heat exchanger structure HEX of that one of the temperature-swing adsorber units TSA_{D1}, TSA_{D2} that undergoes the desorption cycle (namely dryer TSA TSA_{D1} in the operating state depicted in Figure 2), to sustain desorption of water adsorbed by the sorbent bed AD thereof. In the example of Figure 2, the slightly cooler exhaust gas exiting the heat exchanger structure HEX of dryer TSA TSA_{D1} is then routed through the heat exchanger structure HEX of that one of the temperature-swing adsorber units TSA_{C1}, TSA_{C2} that undergoes the desorption cycle (namely CO₂ TSA TSA_{C1}), to sustain desorption of carbon dioxide adsorbed by the sorbent bed AD thereof.

This successive routing, in series, of the hot engine exhaust gas first through the heat exchanger structure HEX of the relevant dryer TSA and then through the heat exchanger structure HEX of the relevant CO₂ TSA is preferable in that the dryer TSA typically uses sorbent material requiring higher desorption temperatures than the sorbent material used for carbon dioxide capture in the CO₂ TSA. In other words, the hottest exhaust gas is used to heat the sorbent bed of the dryer TSA during desorption, and the exhaust gas exiting the heat exchanger structure of the dryer TSA, which is at a slightly lower temperature, is still at a high enough temperature to efficiently heat the sorbent bed of the downstream-located CO₂ TSA.

In other embodiments, a different routing of the hot engine exhaust gas through the TSA units undergoing the desorption cycle could be contemplated. One may for instance contemplate a parallel routing of the hot engine exhaust gas, rather than a series routing as shown. This being said, a series routing of the hot engine exhaust gas is preferable from the point of view of efficiency.

As shown in Figure 2, the temperature-swing adsorption system TSAS further comprises a cooler device CLR, such as an air-to-gas cooler, to cool the exhaust gas to produce cold exhaust gas for further treatment. In the illustrated example, the cooler device CLR is provided to cool the exhaust gas exiting the heat exchanger structure HEX of that one of the temperature-swing adsorber units TSA_{C1}, TSA_{C2} that undergoes the desorption cycle, namely CO₂ TSA TSA_{C1}.

Furthermore, a blower device BLWR is preferably further provided, downstream of the cooler device CLR, to overcome the pressure drops in the system, due to cooling of the exhaust gas, thereby minimizing back pressure on the internal combustion engine.

In the illustrated example, the flow of the cold exhaust gas is advantageously split into multiple streams, namely (i) a stream to be treated (which is fed in succession through the sorbent beds AD of the TSA units undergoing the adsorption cycle), (ii) a stream for cooling the sorbent bed AD of the dryer TSA unit undergoing the adsorption cycle, and (iii) a stream for cooling the sorbent bed AD of the CO₂ TSA unit undergoing the adsorption cycle.

Referring to the stream of cold exhaust gas to be treated, such stream is routed in succession through the sorbent bed AD of that one of the temperature-swing adsorber units TSA_{D1}, TSA_{D2} that undergoes the adsorption cycle (namely dryer TSA TSA_{D2} in the operating state depicted in Figure 2), to cause adsorption of water by the sorbent bed AD, and then through the sorbent bed AD of that one of the temperature-swing adsorber units TSA_{C1}, TSA_{C2} that undergoes the adsorption cycle (namely CO₂ TSA TSA_{C2} in the operating state depicted in Figure 2), to cause adsorption of carbon dioxide by the sorbent bed AD.

The second and third streams of cold exhaust gas are preferably routed through the heat exchanger structure HEX of dryer TSA TSA_{D2} and through the heat exchanger structure HEX of CO₂ TSA TSA_{C2} to cool the sorbent beds AD thereof. The cold exhaust gas exiting the heat exchanger structures HEX can then be vented to atmosphere.

By way of preference, as schematically shown in Figure 2, gas exiting the sorbent bed AD of that one of the temperature-swing adsorber units TSA_{C1}, TSA_{C2} that undergoes the adsorption cycle (in this case CO₂ TSA TSA_{C2}) can advantageously be exploited as a purge gas that is routed through the sorbent bed AD of that one of the temperature-swing adsorber units TSA_{D1}, TSA_{D2} that undergoes the desorption cycle (namely dryer TSA TSA_{D1} in Figure 2). This ensures optimal desorption of water adsorbed by the sorbent bed AD and regeneration thereof for a subsequent adsorption cycle.

In the illustrated example, temperature-swing adsorber units TSA_{D1}, TSA_{D2} are configured such that the purge gas, mixed with water released by that one of the temperature-swing adsorber units TSA_{D1}, TSA_{D2} that undergoes the desorption cycle, is vented to atmosphere. In other embodiments, water could however be recovered or used for other purposes.

By contrast, no purge gas is routed through the sorbent bed AD of that one of the temperature-swing adsorber units TSA_{C1}, TSA_{C2} that undergoes the desorption cycle (namely CO₂ TSA TSA_{C1} in Figure 2), as this would defeat the very purpose of the system, which is to capture and recover carbon dioxide for storage and, potentially, valorization. In such case, captured CO₂ released by that one of the temperature-swing adsorber units TSA_{C1}, TSA_{C2} that undergoes the desorption cycle can be further processed for storage, e.g. in at least one storage device CDS, as schematically shown in Figure 1.

Upon switching the temperature-swing adsorption system TSAS to the subsequent cycle, one will appreciate that the routing of the exhaust gas is reversed, with hot engine exhaust gas being routed in succession through the heat exchanger structure HEX of dryer TSA TSA_{D2}, through the heat exchanger structure HEX of CO₂ TSA TSA_{C2}, both undergoing a desorption cycle, and through the cooler device CLR to be then fed by the blower device BLWR. The relevant stream of cold exhaust gas to be treated would then likewise be fed in succession through the sorbent beds AD of dryer TSA TSA_{D1} and CO₂ TSA TSA_{C1}, both undergoing an adsorption cycle, while separate streams of cold exhaust gas are routed through the heat exchanger structures HEX of dryer TSA TSA_{D1} and CO₂ TSA TSA_{C1} to cool the sorbent beds AD thereof. By the same token, gas exiting CO₂ TSA TSA_{C1} can be routed as purge gas through the sorbent bed AD of dryer TSA TSA_{D2}.

One will accordingly understand that the temperature-swing adsorption system TSAS is provided with an adequate ducting and valve system to ensure appropriate routing of the streams of gas as explained above.

As schematically shown in Figure 3, the temperature-swing adsorption system TSAS could especially form part of an on-board carbon dioxide capture system CCS of a vehicle VHCL, such as a truck, a naval ship, an agricultural vehicle, or the like, to process hot engine exhaust gas produced by the internal combustion engine ICE of the vehicle VHCL and, especially, capture and store carbon dioxide in an associated storage device.

As previously indicated, at least one vacuum pump could be added to the system to pull vacuum during the CO₂ heating/desorption cycle and thereby assist carbon dioxide desorption. Operating the temperature-swing adsorber units TSA_{C1}, TSA_{C2} as temperature-vacuum swing adsorber (TVSA) units can significantly improve the CO₂ desorption efficiency and the capacity of the system.

Various modifications and/or improvements may be made to the above-described embodiments without departing from the scope of the invention as defined by the appended claims.

For instance, while the invention has been described with reference to on-board applications for vehicles, for which implementation of the invention brings substantial benefits, the invention is equally applicable to standalone, stationary implementations.

### LIST OF REFERENCE NUMERALS AND SIGNS USED THEREIN

- CCS: carbon dioxide capture system
- TSAS: temperature-swing adsorption system
- CDS: carbon dioxide storage device
- ICE: internal combustion engine
- TSA_{D1}: (first) temperature-swing adsorber unit for water capture (first "dryer TSA")
- TSA_{D2}: (second) temperature-swing adsorber unit for water capture (second "dryer TSA")
- TSA_{C1}: (third) temperature-swing adsorber unit for carbon dioxide capture (first "CO₂ TSA")
- TSA_{C2}: (fourth) temperature-swing adsorber unit for carbon dioxide capture (second "CO₂ TSA")
- AD: sorbent bed
- HEX: heat exchanger structure thermally coupled to associated sorbent bed AD
- CLR: cooler device (e.g. air-to-gas cooler)
- BLWR: blower device
- VHCL: vehicle with on-board carbon dioxide capture system CCS (e.g. truck, naval ship, agricultural vehicle, etc.)

## Claims

1. A method of capturing carbon dioxide from exhaust gas produced by an internal combustion engine (ICE), the method including:
- providing first and second temperature-swing adsorber units (TSA_{D1}, TSA_{D2}) that are operated in alternate adsorption and desorption cycles to capture and remove water from the exhaust gas; and
- providing third and fourth temperature-swing adsorber units (TSA_{C1}, TSA_{C2}) that are operated in alternate adsorption and desorption cycles to capture and remove carbon dioxide from the exhaust gas,
wherein each of the first to fourth temperature-swing adsorber units (TSA_{D1}, TSA_{D2}, TSA_{C1}, TSA_{C2}) includes a sorbent bed (AD) and a heat exchanger structure (HEX) thermally coupled to the sorbent bed (AD),
wherein the method comprises:
(a) routing hot exhaust gas coming from the internal combustion engine (ICE) through the heat exchanger structure (HEX) of that one (TSA_{D1}; TSA_{D2}) of the first and second temperature-swing adsorber units (TSA_{D1}, TSA_{D2}) that undergoes a desorption cycle, to sustain desorption of water adsorbed by the sorbent bed (AD) thereof, as well as through the heat exchanger structure (HEX) of that one (TSA_{C1}; TSA_{C2}) of the third and fourth temperature-swing adsorber units (TSA_{C1}, TSA_{C2}) that undergoes a desorption cycle, to sustain desorption of carbon dioxide adsorbed by the sorbent bed (AD) thereof;
(b) cooling the exhaust gas to produce cold exhaust gas;
(c) routing the cold exhaust gas through the sorbent bed (AD) of that one (TSA_{D2}; TSA_{D1}) of the first and second temperature-swing adsorber units (TSA_{D1}, TSA_{D2}) that undergoes an adsorption cycle, to cause adsorption of water by the sorbent bed (AD), and then through the sorbent bed (AD) of that one (TSA_{C2}; TSA_{C1}) of the third and fourth temperature-swing adsorber units (TSA_{C1}, TSA_{C2}) that undergoes an adsorption cycle, to cause adsorption of carbon dioxide by the sorbent bed (AD);
(d) switching operation of the first to fourth temperature-swing adsorber units (TSA_{D1}, TSA_{D2}, TSA_{C1}, TSA_{C2}) from the desorption cycle to the adsorption cycle, and vice versa; and
(e) cyclically repeating steps (a) to (d).

2. The method according to claim 1, wherein step (a) includes routing the hot exhaust gas successively through the heat exchanger structure (HEX) of that one (TSA_{D1}; TSA_{D2}) of the first and second temperature-swing adsorber units (TSA_{D1}, TSA_{D2}) that undergoes the desorption cycle and then through the heat exchanger structure (HEX) of that one (TSA_{C1}; TSA_{C2}) of the third and fourth temperature-swing adsorber units (TSA_{C1}, TSA_{C2}) that undergoes the desorption cycle,
and wherein step (b) includes cooling the exhaust gas exiting the heat exchanger structure (HEX) of that one (TSA_{C1}; TSA_{C2}) of the third and fourth temperature-swing adsorber units (TSA_{C1}, TSA_{C2}) that undergoes the desorption cycle to produce the cold exhaust gas.

3. The method according to claim 1 or 2, further including exploiting gas exiting the sorbent bed (AD) of that one (TSA_{C2}; TSA_{C1}) of the third and fourth temperature-swing adsorber units (TSA_{C1}, TSA_{C2}) that undergoes the adsorption cycle as a purge gas; and
routing the purge gas through the sorbent bed (AD) of that one (TSA_{D1}; TSA_{D2}) of the first and second temperature-swing adsorber units (TSA_{D1}, TSA_{D2}) that undergoes the desorption cycle,
and wherein the purge gas, mixed with water released by that one (TSA_{D1}; TSA_{D2}) of the first and second temperature-swing adsorber units (TSA_{D1}, TSA_{D2}) that undergoes the desorption cycle, is preferably vented to atmosphere.

4. The method according to any one of the preceding claims, wherein step (c) further includes routing the cold exhaust gas through the heat exchanger structure (HEX) of that one (TSA_{D2}; TSA_{D1}) of the first and second temperature-swing adsorber units (TSA_{D1}, TSA_{D2}) that undergoes the adsorption cycle to cool the sorbent bed (AD) thereof and/or through the heat exchanger structure (HEX) of that one (TSA_{C2}; TSA_{C1}) of the third and fourth temperature-swing adsorber units (TSA_{C1}, TSA_{C2}) that undergoes the adsorption cycle to cool the sorbent bed (AD) thereof,
and wherein the cold exhaust gas exiting the heat exchanger structure (HEX) is preferably vented to atmosphere.

5. The method according to any one of the preceding claims, wherein step (c) includes feeding the cold exhaust gas under the action of a blower device (BLWR) to those (TSA_{D2}, TSA_{C2}; TSA_{D1}, TSA_{C1}) of the first to fourth temperature-swing adsorber units (TSA_{D1}, TSA_{D2}, TSA_{C1}, TSA_{C2}) that undergo the adsorption cycle.

6. The method according to any one of the preceding claims, wherein the exhaust gas is cooled at step (b) by means of an air-to-gas cooler (CLR).

7. The method according to any one of the preceding claims, wherein carbon dioxide released by that one (TSA_{C1}; TSA_{C2}) of the third and fourth temperature-swing adsorber units (TSA_{C1}, TSA_{C2}) that undergoes the desorption cycle is further processed for storage.

8. The method according to any one of the preceding claims, wherein desorption of carbon dioxide in the third and fourth temperature-swing adsorber units (TSA_{C1}, TSA_{C2}) is performed under vacuum.

9. A temperature-swing adsorption system (TSAS) for capturing carbon dioxide from exhaust gas outputted by an internal combustion engine (ICE), comprising:
- first and second temperature-swing adsorber units (TSA_{D1}, TSA_{D2}) that are operable in alternate adsorption and desorption cycles to capture and remove water from the exhaust gas; and
- third and fourth temperature-swing adsorber units (TSA_{C1}, TSA_{C2}) that are operable in alternate adsorption and desorption cycles to capture and remove carbon dioxide from the exhaust gas,
wherein each of the first to fourth temperature-swing adsorber units (TSA_{D1}, TSA_{D2}, TSA_{C1}, TSA_{C2}) includes a sorbent bed (AD) and a heat exchanger structure (HEX) thermally coupled to the sorbent bed (AD),
wherein the temperature-swing adsorption system (TSAS) is configured to route hot exhaust gas coming from the internal combustion engine (ICE) through the heat exchanger structure (HEX) of that one (TSA_{D1}; TSA_{D2}) of the first and second temperature-swing adsorber units (TSA_{D1}, TSA_{D2}) that undergoes a desorption cycle, to sustain desorption of water adsorbed by the sorbent bed (AD) thereof, as well as through the heat exchanger structure (HEX) of that one (TSA_{C1}; TSA_{C2}) of the third and fourth temperature-swing adsorber units (TSA_{C1}, TSA_{C2}) that undergoes a desorption cycle, to sustain desorption of carbon dioxide adsorbed by the sorbent bed (AD) thereof,
wherein the temperature-swing adsorption system (TSAS) further comprises a cooler device (CLR) to cool the exhaust gas to produce cold exhaust gas,
and wherein the temperature-swing adsorption system (TSAS) is further configured to route the cold exhaust gas through the sorbent bed (AD) of that one (TSA_{D2}; TSA_{D1}) of the first and second temperature-swing adsorber units (TSA_{D1}, TSA_{D2}) that undergoes an adsorption cycle, to cause adsorption of water by the sorbent bed (AD), and then through the sorbent bed (AD) of that one (TSA_{C2}; TSA_{C1}) of the third and fourth temperature-swing adsorber units (TSA_{C1}, TSA_{C2}) that undergoes an adsorption cycle, to cause adsorption of carbon dioxide by the sorbent bed (AD).

10. The temperature-swing adsorption system (TSAS) according to claim 9, wherein the temperature-swing adsorption system (TSAS) is configured to route the hot exhaust gas successively through the heat exchanger structure (HEX) of that one (TSA_{D1}; TSA_{D2}) of the first and second temperature-swing adsorber units (TSA_{D1}, TSA_{D2}) that undergoes the desorption cycle and then through the heat exchanger structure (HEX) of that one (TSA_{C1}; TSA_{C2}) of the third and fourth temperature-swing adsorber units (TSA_{C1}, TSA_{C2}) that undergoes the desorption cycle,
and wherein the temperature-swing adsorption system (TSAS) is further configured such that the exhaust gas exiting the heat exchanger structure (HEX) of that one (TSA_{C1}; TSA_{C2}) of the third and fourth temperature-swing adsorber units (TSA_{C1}, TSA_{C2}) that undergoes the desorption cycle is cooled by the cooler (CLR) to produce the cold exhaust gas.

11. The temperature-swing adsorption system (TSAS) according to claim 9 or 10, wherein the temperature-swing adsorption system (TSAS) is further configured to exploit gas exiting the sorbent bed (AD) of that one (TSA_{C2}; TSA_{C1}) of the third and fourth temperature-swing adsorber units (TSA_{C1}, TSA_{C2}) that undergoes the adsorption cycle as a purge gas and to route the purge gas through the sorbent bed (AD) of that one (TSA_{D1}; TSA_{D2}) of the first and second temperature-swing adsorber units (TSA_{D1}, TSA_{D2}) that undergoes the desorption cycle,
and wherein the first and second temperature-swing adsorber units (TSA_{D1}, TSA_{D2}) are configured such that the purge gas, mixed with water released by that one (TSA_{D1}; TSA_{D2}) of the first and second temperature-swing adsorber units (TSA_{D1}, TSA_{D2}) that undergoes the desorption cycle, is preferably vented to atmosphere.

12. The temperature-swing adsorption system (TSAS) according to any one of claims 9 to 11, further configured to route the cold exhaust gas through the heat exchanger structure (HEX) of that one (TSA_{D2}; TSA_{D1}) of the first and second temperature-swing adsorber units (TSA_{D1}, TSA_{D2}) that undergoes the adsorption cycle to cool the sorbent bed (AD) thereof and/or through the heat exchanger structure (HEX) of that one (TSA_{C2}; TSA_{C1}) of the third and fourth temperature-swing adsorber units (TSA_{C1}, TSA_{C2}) that undergoes the adsorption cycle to cool the sorbent bed (AD) thereof,
and wherein the first and second temperature-swing adsorber units (TSA_{D1}, TSA_{D2}) and/or the third and fourth temperature-swing adsorber units (TSA_{C1}, TSA_{C2}) are configured such that the cold exhaust gas exiting the heat exchanger structure (HEX) is preferably vented to atmosphere.

13. The temperature-swing adsorption system (TSAS) according to any one of claims 9 to 12, further comprising a blower device (BLWR) to feed the cold exhaust gas to those (TSA_{D2}, TSA_{C2}; TSA_{D1}, TSA_{C1}) of the first to fourth temperature-swing adsorber units (TSA_{D1}, TSA_{D2}, TSA_{C1}, TSA_{C2}) that undergo the adsorption cycle, and/or
wherein the cooler device (CLR) is an air-to-gas cooler.

14. A carbon dioxide capture system (CCS) comprising a temperature-swing adsorption system (TSAS) in accordance with any one of claims 9 to 13 and at least one storage device (CDS) to store carbon dioxide released by that one (TSA_{C1}; TSA_{C2}) of the third and fourth temperature-swing adsorber units (TSA_{C1}, TSA_{C2}) that undergoes the desorption cycle,
wherein the carbon dioxide capture system (CSS) preferably further comprises at least one vacuum pump to assist carbon dioxide desorption in the third and fourth temperature-swing adsorber units (TSA_{C1}, TSA_{C2}).

15. A vehicle (VHCL) equipped with an on-board carbon dioxide capture system (CCS) including a temperature-swing adsorption system (TSAS) in accordance with any one of claims 9 to 13 for carbon dioxide capture from exhaust gas outputted by an internal combustion engine (ICE) of the vehicle (VHCL).
